# EUROPÄISCHE PATENTSCHRIFT

(11) **EP 3 598 078 B1**
(45) Veröffentlichungstag und Bekanntmachung des Hinweises auf die Patenterteilung: **12.05.2021**
(21) Anmeldenummer: 18184774.0
(22) Anmeldetag: 20.07.2018
(51) Int. Cl.: G01F 1/00, G01F 23/00, G05B 19/042

(54) **BATTERIEBETRIEBENES FELDGERÄT MIT ZEITINFORMATIONSÜBERMITTLUNG**
BATTERY-OPERATED FIELD DEVICE WITH TIME INFORMATION TRANSMISSION
APPAREIL DE TERRAIN À ENTRAÎNEMENT PAR BATTERIE À TRANSMISSION D'INFORMATIONS SUR L'HEURE

(43) Veröffentlichungstag der Anmeldung: 22.01.2020
(73) Patentinhaber: VEGA Grieshaber KG, 77709 Wolfach (DE)
(72) Erfinder: WÄLDE, Steffen, 78078 Niedereschach (DE); BÖRSIG, Jörg, 77776 Schapbach (DE)
(74) Vertreter: Maiwald Patent- und Rechtsanwaltsgesellschaft mbH

(56) Entgegenhaltungen:
- EP-A1- 2 256 566
- EP-A1- 3 035 010
- WO-A1-2013/156945
- GB-A- 2 271 691
- KR-B1- 101 862 143
- US-A1- 2013 069 817
- US-B1- 7 321 774

## Beschreibung

Die Erfindung betrifft batteriebetriebene Feldgeräte und ein Verfahren zum Betrieb von batteriebetriebenen Feldgeräten, insbesondere Feldgeräte zur Füllstandmessung, zur Grenzstandbestimmung, zur Erfassung der Topologie einer Füllgutoberfläche oder zur Anzeige der Messwerte dieser Geräte. Beispiele für derartige Geräte sind ein Impedanzgrenzschalter, ein Vibrationsgrenzschalter, ein Füllstandradar bzw. ein Radarfüllstandmessgerät oder eine Anzeige-Vorrichtung, beispielsweise mit einem Niedrigenergie-Display. Weiter betrifft die Erfindung eine Verwendung, ein Programmelement und ein computerlesbares Medium.

### Hintergrund

Zur Füllstandmessung, beispielsweise in einem Behälter, werden verschiedene Arten von Sensorsystemen eingesetzt. Einige dieser Sensor- oder Anzeigesysteme werden als Feldgeräte ausgeführt, d.h. diese Geräte werden unabhängig von einem Stromnetz eingesetzt und sind daher auf eine Batterie oder Ähnliches angewiesen. Einige Ausführungsformen sind verkapselt, z.B. aus Gründen des Korrosionsschutzes, so dass das Auswechseln der Batterie aufwändig sein kann. Es ist daher wichtig, diese Feldgeräte energiesparend zu betreiben, so dass diese möglichst lange ohne Wartung und andere Eingriffe betrieben werden können.

Die Druckschrift WO 2013 156 945 A1 beschreibt einen Gasmesser mit einer Funkeinheit zur Kommunikation mit einem externen Netzwerk.

Die EP 2 256 566 A1 und die EP 3 035 010 A1 betreffen Messgeräte, beispielsweise zum Messen eines Füllstands, eines Grenzstands, eines Drucks oder eines Durchflusses.

Die EP 2 256 566 A1 betrifft ein batteriebetriebenes Feldgerät mit einer Zeitmanagementeinheit und einer Funkeinheit gemäß dem Stand der Technik.

### Zusammenfassung der Erfindung

Es ist Aufgabe der Erfindung, eine Systemarchitektur und ein Verfahren bereitzustellen, mittels dessen batteriebetriebene Feldgeräte möglichst energiesparend betrieben werden können.

Diese Aufgabe wird durch den Gegenstand der unabhängigen Patentansprüche gelöst. Weiterbildungen der Erfindung ergeben sich aus den Unteransprüchen und der folgenden Beschreibung.

Ein batteriebetriebenes Feldgerät, insbesondere eine Füllstand-, Durchfluss-, Druck-Sensorvorrichtung oder Anzeige-Vorrichtung, weist einen Energiespeicher, auf. Dieser kann als Batterie, als Akkumulator (Akku), als Brennstoffzelle oder als eine entsprechende Vorrichtung ausgeführt sein.

Weiterhin weist das Feldgerät eine Zeitmanagementeinheit auf, die mit dem Energiespeicher über eine erste Leitung verbunden ist. Die Zeitmanagementeinheit regelt dabei zumindest einige Einstellungen oder Verfahren, die zur Erlangung oder zu Übertragen von Zeitinformation und/oder zur Steuerung mittels Zeitinformation dienen. Die Zeitmanagementeinheit ist mit dem Energiespeicher über eine erste Leitung verbunden, so dass diese kontinuierlich mit Strom versorgt wird, d.h. zumindest solange der Energiespeicher funktionsfähig ist.

Ferner weist das Feldgerät eine Funkeinheit auf, die mit dem Energiespeicher über einen Schalter verbunden ist. Die Funkeinheit ist geeignet, Informationen zu senden und zu empfangen. Die Funkeinheit kann nur dann betrieben werden, wenn der Schalter eingeschaltet ist und die Funkeinheit mit dem Energiespeicher verbunden ist.

Die Funkeinheit ist eingerichtet, eine Zeitinformation über die nächste Messung über ein erstes Interface an die Zeitmanagementeinheit zu übertragen und/oder von der Funkeinheit zu empfangen, wenn der Schalter eingeschaltet ist.

Durch diese Systemarchitektur des Feldgeräts ist es nicht mehr erforderlich, dass das gesamte Feldgerät ununterbrochen eingeschaltet ist, sondern Teile des Feldgeräts, insbesondere sämtliche Teile außer der Zeitmanagementeinheit, können ausgeschaltet sein, wenn keine Messung stattfindet. Bei einer Anzeige-Vorrichtung können Teile des Feldgeräts ausgeschaltet sein, wenn keine Anzeige stattfindet. Bei einigen Ausführungsformen einer Anzeige-Vorrichtung können Teile des Feldgeräts ausgeschaltet sein, solange die Anzeige sich nicht verändert.

Durch die genannte Systemarchitektur des Feldgeräts kann der Energieverbrauch zumindest in einigen Ausführungsformen um mehrere Größenordnungen reduziert werden, weil eine Messung oder Anzeige deutlich weniger als eine Sekunde dauert, die Abstände zwischen den Messungen aber Stunden oder sogar mehrere Tage betragen können.

In einer Ausführungsform ist die Zeitinformation eine absolute Zeit, eine relative Zeit, eine Kombination und/oder eine Wiederholung der absoluten oder relativen Zeit.

Wenn als Zeitinformation eine absolute Zeit gewählt wird, z.B. ein Zeitpunkt "10:26 Uhr", ggf. zusammen mit einem Datum, dann bedeutet dies, dass die nächste Messung für 10:26 Uhr terminiert ist. Dies kann zur Folge haben, dass das Messergebnis zu diesem Zeitpunkt - plus einem Zeitraum für die Aufbereitung und Übertragung des Messergebnisses - gesendet wird. In einer Ausführungsform kann auch eine Wiederholung des Zeitpunkts bestimmt sein, z.B. "jeden Tag um 10:26 Uhr".

Wenn als Zeitinformation eine relative Zeit gewählt wird, z.B. eine Zeitspanne "40 Minuten", dann bedeutet dies, dass die nächste Messung mit einem Abstand von 40 Minuten vom Beginn (oder, gemäß einer anderen Definition, von dem Ende) der aktuellen Messung terminiert ist. Dies kann zur Folge haben, dass das Messergebnis nach dieser Zeitspanne - ggf. plus einem Zeitraum für die Aufbereitung und Übertragung des Messergebnisses - gesendet wird. In einer Ausführungsform kann auch eine Wiederholung der relativen Zeit bestimmt sein, z.B. "alle 40 Minuten".

In einer Ausführungsform kann eine Kombination und/oder Wiederholung der absoluten oder relativen Zeit bestimmt sein. Beispiele sind: "jeden Tag von 10:20 Uhr bis 11:40 Uhr alle 4 Minuten" oder "11:07:22 für eine Zeitdauer von 91,8 Sekunden".

Die Zeitinformation kann zur Folge haben, dass eine Empfangsvorrichtung von einer vordefinierten Zeitspanne vor dem Zeitpunkt der Messung bis zu einer vordefinierten Zeitspanne nach dem Zeitpunkt der Messung eingeschaltet wird. In einer Ausführungsform kann die vordefinierte Zeitspanne vor dem Zeitpunkt der Messung Null sein.

In einer Ausführungsform wird die Zeitinformation, insbesondere die absolute Zeit oder die relative Zeit, zur zeitlichen Synchronisation des Feldgeräts verwendet. Es kann nämlich sein, dass die lokale Zeit des Feldgeräts von einer globalen Zeit - die beispielsweise von einer Atomuhr oder von einem Server bestimmt wird - abweicht. Dies kann beispielsweise der Fall sein, wenn als Taktgeber für die lokale Zeit ein Quarz benutzt wird, der z.B. Temperaturschwankungen unterliegt, welche zu einer Änderung der Resonanzfrequenz des Quarzes führen können. Dann kann z.B. die lokale Zeit des Feldgeräts mit einer absoluten Zeit (z.B. mit der globalen Zeit von dem Server) überschrieben werden. Für die Synchronisation kann auch eine relative Zeit an das Feldgerät übertragen werden, mittels derer die lokale Zeit des Feldgeräts korrigiert wird. Dies kann geschehen, z.B. um Laufzeiten der Signale zwischen Feldgerät und Server (z.B. das Roundup-Delay) zu berücksichtigen.

In einer Ausführungsform weist das Feldgerät weiterhin eine Konsole auf, die entweder über eine weitere Leitung mit dem Energiespeicher verbunden ist oder einen eigenen Energiespeicher aufweist. Die Konsole kann ein Gerät sein, das an das Feldgerät angesteckt werden kann und das beispielsweise ein Servicetechniker für die Wartung an das Feldgerät anschließt. Die Konsole kann eine drahtlose Verbindung, z.B. eine Bluetooth- und/oder NFC-Schnittstelle, aufweisen. Die Konsole kann Induktiv mit dem Feldgerät verbunden sein. Die Konsole kann eine Stromversorgung beinhalten, die geeignet ist, einen Akku des Feldgeräts aufzuladen.

In einer Ausführungsform ist die Zeitmanagementeinheit eingerichtet, die Zeitinformation an die Konsole zu übertragen und/oder von der Konsole zu empfangen. Dies kann beispielsweise bei einer Wartung vor Ort geschehen. In einer Ausführungsform kann dies zur Synchronisation der lokalen Zeit mit einer anderen Zeit - z.B. der Zeit eines anderen Feldgeräts oder der Zeit einer Atomuhr - genutzt werden.

In einer Ausführungsform weist das Feldgerät weiterhin ein Messfrontend und/oder ein Anzeigefrontend auf, das mit dem Energiespeicher über einen Schalter verbunden ist.

Das Feldgerät kann also mindestens zwei Typen von Frontends aufweisen, die nicht ununterbrochen betrieben werden, sondern erst, wenn sie über den Schalter mit dem Energiespeicher verbunden sind, d.h. eingeschaltet sind. Dabei ist das Messfrontend eingerichtet, einen Messwert, welcher einen Füllstand, einen Durchfluss oder einen Druck umfasst, zu messen. Dabei ist das Anzeigefrontend eingerichtet, den Messwert anzuzeigen. Bei einer Anzeige-Vorrichtung können Teile des Feldgeräts ausgeschaltet sein, wenn keine Anzeige stattfindet. Bei einigen Ausführungsformen einer Anzeige-Vorrichtung können Teile des Feldgeräts ausgeschaltet sein, solange die Anzeige sich nicht verändert. Beispiele derartiger Ausführungsformen beinhalten Anzeige-Vorrichtungen, die sogenanntes elektronisches Papier (E-Papier oder ePaper) verwenden.

In einer Ausführungsform sind das Messfrontend und das Anzeigefrontend in demselben Feldgerät angeordnet. In einer Ausführungsform weist das Feldgerät nur das Messfrontend und kein Anzeigefrontend auf. In einer Ausführungsform weist das Feldgerät nur das Anzeigefrontend und kein Messfrontend auf.

In einigen Ausführungsformen ist die Funkeinheit weiterhin eingerichtet, die Zeitinformation und/oder den Messwert an ein anderes Feldgerät zu übertragen und/oder von dem anderen Feldgerät zu empfangen. Beispielsweise können Feldgeräte ohne Anzeigefrontend und ohne Messfrontend verwendet werden, um Messergebnisse, oder auch andere Daten, von anderen Feldgeräten zu sammeln und weiterzuleiten. Diese Feldgeräte können z.B. eine Repeaterfunktion oder eine energiesparende Datensammelfunktion aufweisen, so dass die gesammelten Daten an einen Funkmast gesendet und insbesondere in einem zentralen Server weiterverarbeitet werden können.

In einigen Ausführungsformen, welche das Anzeigefrontend und die Funkeinheit beinhalten, können die Messergebnisse von mehreren Feldgeräten, welche das Messfrontend und die Funkeinheit beinhalten, angezeigt werden.

In einer Ausführungsform ist die Funkeinheit und/oder die Konsole weiterhin eingerichtet, die Zeitinformation und/oder den Messwert an einen Server zu senden und/oder von dem Server zu empfangen.

Dies kann insbesondere dafür genutzt werden, ein Feldgerät mit einem anderen Feldgerät und/oder einem zentralen Server zu synchronisieren. Beispielsweise können manche Feldgeräte ungenaue Uhren aufweisen, was z.B. durch Temperaturschwankungen, denen die Feldgeräte ausgesetzt sind, verursacht werden kann. Dies kann dazu führen, dass die Zeitinformation auf dem Feldgerät eine andere Bedeutung hat als auf einem anderen Feldgerät und/oder auf dem zentralen Server. Bei einer Beispielkonstellation kann es sein, dass ein erstes Feldgerät, welches ein Messfrontend beinhaltet, eine deutlich andere erste lokale Zeitaufweist als eine zweite lokale Zeit eines zweiten Feldgeräts, welches ein Anzeigefrontend beinhaltet. Die lokale Zeit ist dabei die Zeit in der Zeitmanagementeinheit des jeweiligen Feldgeräts. Bei einem deutlichen Unterschied zwischen erster und zweiter lokaler Zeit kann es sein, dass das erste Feldgerät die Messergebnisse zu einem Zeitpunkt sendet, zu dem das zweite Feldgerät ausgeschaltet ist. Wenn das zweite Feldgerät als einziger Empfänger der Messergebnisse vorgesehen ist, gehen diese Messergebnisse bei einer solchen Beispielkonstellation verloren. Wenn das zweite Feldgerät (oder ein Server) die eigene lokale Zeit an das erste Feldgerät sendet, so kann dies für eine Synchronisation der lokalen Zeiten genutzt werden.

Es können auch Feldgeräte, die z.B. eine Repeaterfunktion oder eine energiesparende Datensammelfunktion aufweisen, genutzt werden, um die gesammelten Daten an einen zentralen Server zu senden und dort weiterzuverarbeiten. Der Server kann drahtlos über die Funkeinheit, oder drahtlos oder drahtgebunden über die Konsole, mit dem Feldgerät verbunden sein.

In einer Ausführungsform weist das Feldgerät weiterhin eine Rechen- und Steuereinheit auf, die zum Empfangen und zur Verarbeitung des Messwerts von dem Messfrontend und/oder zum Aufbereiten und Senden des Messwerts an das Anzeigefrontend eingerichtet ist. Die Rechen- und Steuereinheit ermöglicht z.B. eine Vorverarbeitung und/oder eine Verschlüsselung der Messdaten und trägt dazu bei, das Feldgerät flexibler und/oder für ein breiteres Anwendungsspektrum einzusetzen.

In einer Ausführungsform ist die Funkeinheit Sender und/oder Empfänger eines Niedrigenergieweitverkehrnetzwerks. Diese Netzwerke werden auch als LPWAN (Low Power Wide Area Network) bezeichnet.

Die Zeitmanagementeinheit ist eingerichtet, den Schalter, mittels der Zeitinformation, zu steuern. Der Schalter ist dann als steuerbarer Schalter ausgeführt und kann auf Basis der Zeitinformation ein- und ausgeschaltet werden.

Die Erfindung umfasst auch ein Verfahren zum Betrieb eines batteriebetriebenen Feldgeräts wie oben beschrieben. Das Verfahren weist folgende Schritte auf:
- Einschalten einer Funkeinheit, mittels eines Schalters;
- Empfangen einer Zeitinformation, mittels der Funkeinheit und übertragen der
- Zeitinformation an eine Zeitmanagementeinheit, wobei die Zeitmanagementeinheit eingerichtet ist, den Schalter mittels der Zeitinformation zu steuern.

In einer Ausführungsform weist das Feldgerät weiterhin folgende Schritte auf:
- Bereitstellen einer Konsole;
- Senden oder empfangen einer Zeitinformation, von der oder an die Konsole.

Die Erfindung umfasst ferner ein Programmelement, welches, wenn es auf einer Zeitmanagementeinheit und/oder auf einer Rechen- und Steuereinheit ausgeführt wird, geeignet ist, eines der oben genannten Verfahren durchzuführen.

Die Erfindung umfasst weiterhin ein computerlesbares Medium, auf dem das genannte Programmelement gespeichert ist.

Die Erfindung umfasst außerdem die Verwendung eines oben beschriebenen batteriebetriebenen Feldgeräts zur Messung und/oder zur Anzeige des Füllstands, Drucks oder Durchflusses von Flüssigkeiten oder von Schüttgut.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Beschreibung der Figuren

**Fig. 1** zeigt schematisch eine Ausführungsform eines batteriebetriebenen Feldgeräts;
**Fig. 2** zeigt schematisch eine weitere Ausführungsform eines batteriebetriebenen Feldgeräts;
**Fig. 3** zeigt schematisch eine erste Beispielkonstellation eines batteriebetriebenen Feldgeräts;
**Fig. 4** zeigt ein erstes Zeitdiagramm des Betriebs eines batteriebetriebenen Feldgeräts;
**Fig. 5** zeigt schematisch eine zweite Beispielkonstellation eines batteriebetriebenen Feldgeräts;
**Fig. 6** zeigt ein zweites Zeitdiagramm des Betriebs eines batteriebetriebenen Feldgeräts;
**Fig. 7** zeigt schematisch eine dritte Beispielkonstellation eines batteriebetriebenen Feldgeräts;
**Fig. 8** zeigt schematisch eine vierte Beispielkonstellation eines batteriebetriebenen Feldgeräts;
**Fig. 9** zeigt schematisch eine fünfte Beispielkonstellation eines batteriebetriebenen Feldgeräts;
**Fig. 10** zeigt ein drittes Zeitdiagramm des Betriebs eines batteriebetriebenen Feldgeräts;
**Fig. 11** zeigt ein erstes Verfahren zum Betrieb eines batteriebetriebenen Feldgeräts;
**Fig. 12** zeigt ein zweites Verfahren zum Betrieb eines batteriebetriebenen Feldgeräts.

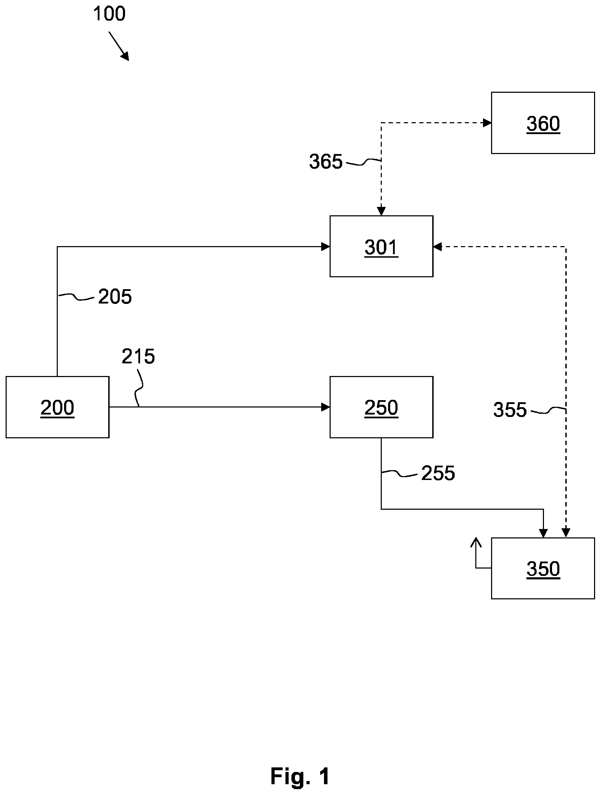

Die Ausführungsform des Feldgeräts 100 von **Fig. 1** weist einen Energiespeicher 200 auf. Dieser kann als Batterie, als Akkumulator (Akku), als Brennstoffzelle oder als eine ähnliche Vorrichtung ausgeführt sein. Der Energiespeicher 200 ist über eine erste Leitung 205 mit einer Zeitmanagementeinheit 301 verbunden. Die Zeitmanagementeinheit 301 wird also von dem Energiespeicher 200 kontinuierlich mit Strom versorgt, zumindest solange der Energiespeicher 200 funktionsfähig ist, d.h. z.B. mehr als eine bestimmte Spannung aufweist. Die Zeitmanagementeinheit 301 beinhaltet eine Uhr mit einer lokalen Zeit. Die Zeitmanagementeinheit 301 regelt einige Einstellungen oder Verfahren, die zur Erlangung oder zum Übertragen von Zeitinformation und/oder zur Steuerung mittels einer Zeitinformation dienen.

Ferner weist das Feldgerät 100 eine Funkeinheit 350 auf, die mit dem Energiespeicher 200 über einen Schalter 250 verbunden ist, welcher zwischen den Leitungen 215 und 255 angeordnet ist. Dabei wird die Leitung 255 - und Geräte, die mit dem Schalter 250 über die Leitung 255 verbunden sind - mittels des Schalters 250 ein- und ausgeschaltet. Die Funkeinheit 350 ist geeignet, Informationen zu senden und zu empfangen. Die Funkeinheit 350 kann nur dann betrieben werden, wenn der Schalter 250 eingeschaltet ist und so die Funkeinheit 350 mit dem Energiespeicher 200 verbunden ist. Die Funkeinheit 350 ist eingerichtet, eine Zeitinformation über die nächste Messung über ein erstes Interface 355 an die Zeitmanagementeinheit 301 zu übertragen und/oder von der zu Zeitmanagementeinheit 301 zu empfangen, wenn der Schalter 250 eingeschaltet ist. Die Zeitinformation kann eine absolute Zeit, eine relative Zeit und/oder eine Kombination oder Wiederholung der absoluten oder relativen Zeit sein.

Des Weiteren ist die Funkeinheit eingerichtet, eine globale Zeit zu empfangen und diese über ein erstes Interface 355 an die Zeitmanagementeinheit 301 zu übertragen. Die Zeitmanagementeinheit 301 ist dabei so ausgestaltet, die lokale Zeit mit der globalen Zeit zu überschreiben oder auf andere Weise zu korrigieren, und sich somit auf die globale Zeit zu synchronisieren.

In einem weiteren Ausführungsbeispiel ist die Zeitmanagementeinheit 301 derart ausgestaltet, dass die lokale Zeit an die Funkeinheit 350 über ein Interface 355 übertragen werden kann, um so als globale Zeit für andere Geräte zu fungieren.

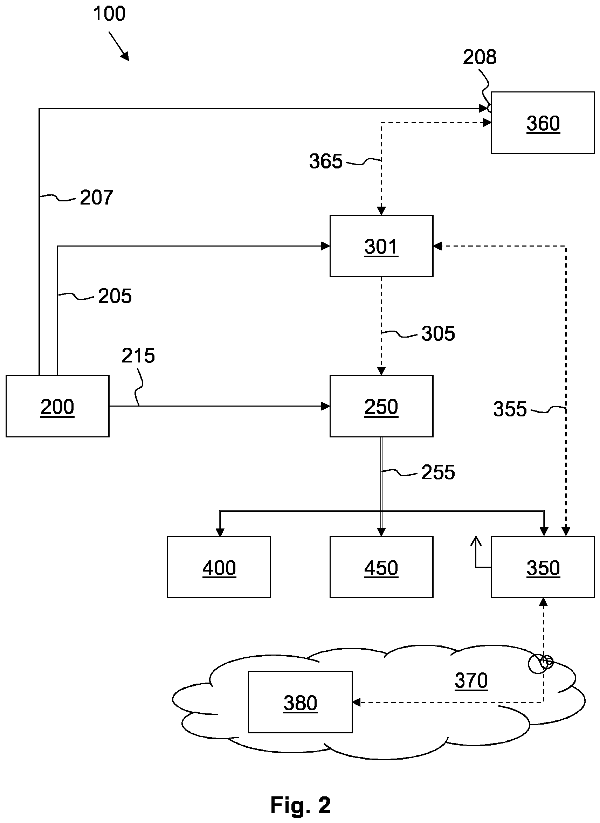

In **Fig. 2** ist eine weitere Ausführungsform eines batteriebetriebenen Feldgeräts 100 dargestellt. Dabei sind, ähnlich wie in **Fig. 1****,** ein Energiespeicher 200, eine Zeitmanagementeinheit 301 und eine Funkeinheit 350 gezeigt, die mit dem Energiespeicher 200 über einen Schalter 250 verbunden ist. Weiterhin sind eine Recheneinheit 450 und ein Verbraucher 400 über die Leitung 255 mit dem Schalter 250 verbunden. Als Verbraucher 400 kann dabei beispielsweise ein Messfrontend 410 und/oder ein Anzeigefrontend 420 und/oder ein anderes Gerät sein.

Durch diese Systemarchitektur und, in ähnlicher Weise, durch die Systemarchitektur von **Fig. 1** ist es nicht mehr erforderlich, dass das gesamte Feldgerät 100 ununterbrochen eingeschaltet bleibt, sondern Teile des Feldgeräts 100 - in der Ausführungsform von **Fig. 2****:** die Funkeinheit 350, die Recheneinheit 450 und ein Verbraucher 400 - können ausgeschaltet sein, wenn keine Messung stattfindet. So können bei einer Anzeige-Vorrichtung Teile des Feldgeräts 100 ausgeschaltet sein, wenn keine Anzeige stattfindet. Weil die Elemente Funkeinheit 350, Recheneinheit 450 und Verbraucher 400 den meisten Strom des Feldgeräts 100 verbrauchen, kann der Energieverbrauch in der gezeigten Ausführungsform um mehrere Größenordnungen reduziert werden, weil eine Messung oder Anzeige deutlich weniger als eine Sekunde dauert, die Abstände zwischen den Messungen aber Stunden oder sogar mehrere Tage betragen können.

Die Ausführungsform von **Fig. 2** weist als weitere Komponente eine Konsole 360 auf, die über die Leitung 207 und einen Anschluss 208 mit dem Energiespeicher 200 verbunden ist. Der Anschluss 208 kann als Stecker implementiert sein und in einer Ausführungsform auch zum Anschluss des Interfaces 365 dienen. Die Konsole 360 kann einen eigenen Energiespeicher aufweisen (in **Fig. 2** nicht gezeigt), der so eingerichtet sein kann, dass damit der Energiespeicher 200 des Feldgeräts 100 - wenn der Energiespeicher 200 aufladbar gestaltet ist - geladen werden kann. Die Konsole 360 kann auch Informationen - z.B. Zeitinformationen oder Messwerte - mit der Zeitmanagementeinheit 301 über das Interface 365 austauschen.

Die Funkeinheit 350 kann weiterhin mit einem Server 380 kommunizieren, der sich in einer Cloud 370 befindet. Dabei können beispielsweise Zeitinformationen oder Messwerte ausgetauscht werden.

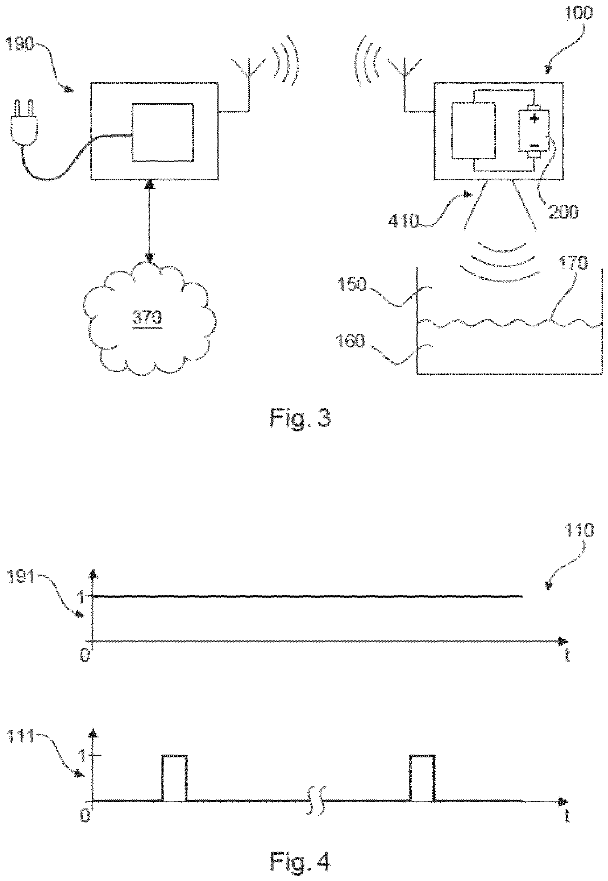

**Fig. 3** zeigt schematisch eine erste Beispielkonstellation eines batteriebetriebenen Feldgeräts 100 (rechte Seite) mit einem Energiespeicher 200. Dabei misst das Feldgerät 100, mittels des Messfrontends 410, einen Füllstand 170 eines Füllguts 160 in einem Behälter 150. Das Feldgerät 100 ist drahtlos mit einem netzbetriebenen Gerät 190 (linke Seite), z.B. einer Basisstation, verbunden. Das Gerät 190 ist mit einer Cloud 370 verbunden. Das Gerät 190 kann das Signal eines LPWAN-Gerätes, wie z.B. das des dargestellten Feldgeräts 100, empfangen und z.B. die Messwerte in die Cloud 370 übertragen.

**Fig. 4** zeigt ein erstes Zeitdiagramm 110 des Betriebs eines batteriebetriebenen Feldgeräts 100 (Teildiagramm 111) in Kombination mit einem netzbetriebenen Gerät 190 (Teildiagramm 191). Dies entspricht einem Szenario, wie es z.B. in der Beispielkonstellation von **Fig. 3** dargestellt ist. Es ist in Teildiagramm 191 deutlich sichtbar, dass das netzbetriebene Gerät 190 immer sende- und empfangsbereit ist, während in Teildiagramm 111 das Feldgerät 100 aus Energiespargründen nur in kurzen Zeitabschnitten sende- und empfangsbereit ist.

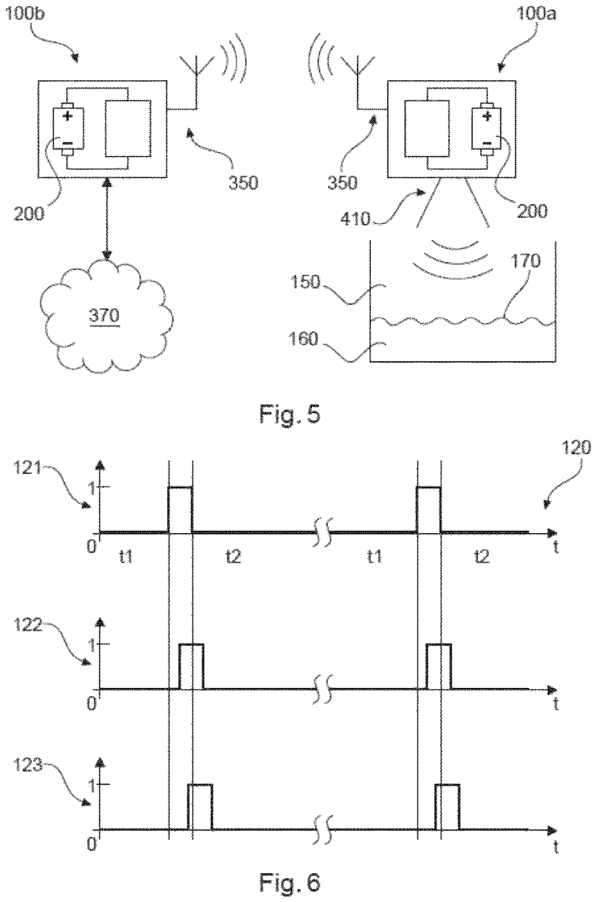

**Fig. 5** zeigt schematisch eine zweite Beispielkonstellation eines batteriebetriebenen Feldgeräts 100a (rechte Seite) mit einem Energiespeicher 200 und einem Messfrontend 410. Das Feldgerät 100a kommuniziert mit einem anderen Feldgerät 100b (linke Seite), das als Repeater gestaltet sein kann. Dies kann beispielsweise in Bereichen eingesetzt werden, in denen kein Stromnetz zur Verfügung steht. Das batteriebetriebene Feldgerät 100b ist dabei eingerichtet, Messdaten von dem Messfrontend 410 des Feldgeräts 100a zu empfangen, ggf. zu sammeln und - z.B. über einen Funkmast - in eine Cloud 370 zu senden.

**Fig. 6** zeigt ein zweites Zeitdiagramm 120 des Betriebs eines batteriebetriebenen Feldgeräts 100a mit einem weiteren batteriebetriebenen Feldgerät 100b, wie es z.B. in der Beispielkonstellation von **Fig. 5** dargestellt ist. In Teildiagramm 121 sind wieder die Sendezeiten des Feldgeräts 100a gezeigt; das Feldgerät 100 sendet dabei zwischen der Zeit t1 und der Zeit t2. Das weitere batteriebetriebene Feldgerät 100b kann dabei z.B. das Zeitdiagramm 122 oder 123 aufweisen. Während bei Zeitdiagramm 122 die Messdaten - z.B. bei entsprechender Sicherung mit redundanten Informationen - noch mit einer gewissen Wahrscheinlichkeit bzw. mit ausreichender Qualität übertragen werden können, gelingt dies bei Zeitdiagramm 123 nicht mehr. Grund dafür können differierende lokale Zeiten in den verschiedenen Feldgeräten 100a und 100b sein. Diesem Effekt kann mit einer Synchronisation der lokalen Zeiten wie oben beschrieben entgegengewirkt werden.

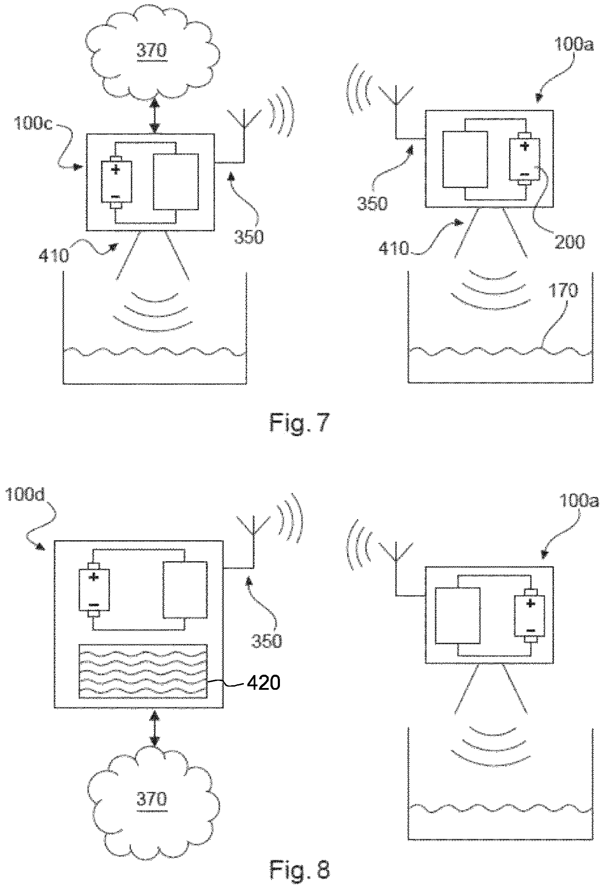

**Fig. 7** zeigt schematisch eine dritte Beispielkonstellation eines batteriebetriebenen Feldgeräts 100. Dabei entspricht das jeweils rechts dargestellte Feldgerät 100a von **Fig. 7, 8** und **9** dem jeweils rechts dargestellten Feldgerät 100a von **Fig. 3** und **5****.** Das links dargestellte Feldgerät 100c weist dabei ein Messfrontend 410 und gleichzeitig eine Funkeinheit 350 auf, mittels derer es z.B. mit einer Cloud 370 kommunizieren kann.

**Fig. 8** zeigt schematisch eine vierte Beispielkonstellation eines batteriebetriebenen Feldgeräts 100. Das links dargestellte Feldgerät 100d weist dabei ein Anzeigefrontend 420 und gleichzeitig eine Funkeinheit 350 auf, mittels derer es z.B. mit einer Cloud 370 kommunizieren kann.

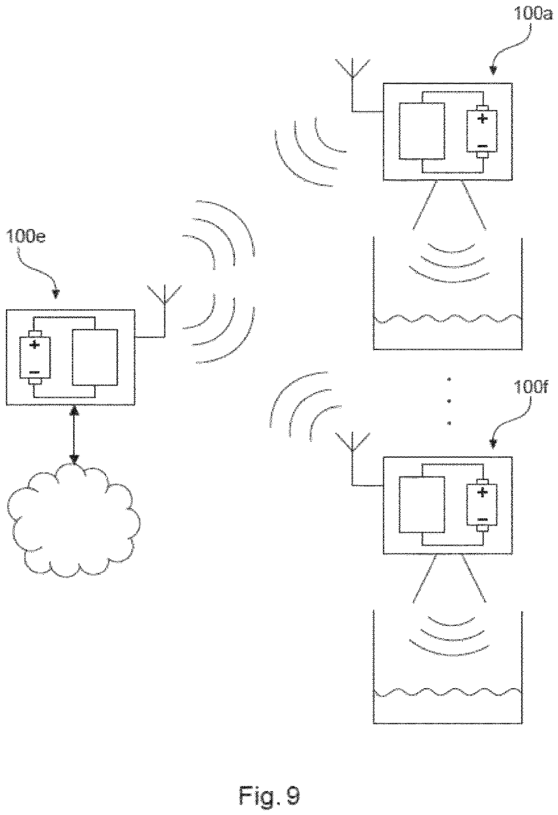

**Fig. 9** zeigt schematisch eine fünfte Beispielkonstellation eines batteriebetriebenen Feldgeräts 100. Dabei ist dargestellt, dass mehrere Feldgeräte 100e, 100f mit Sensoren mit einem Feldgerät 100a kommunizieren können. Ebenfalls denkbar ist eine Kettenschaltung der Feldgeräte.

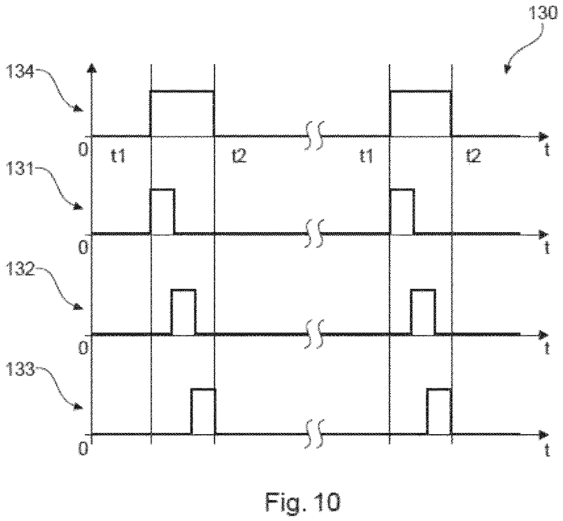

**Fig. 10** zeigt ein drittes Zeitdiagramm 130 des Betriebs eines batteriebetriebenen Feldgeräts 100. Damit mehrere Feldgeräte, mit Teildiagrammen 131, 132, 133, mit einem zentralen Feldgerät 100 kommunizieren können, muss dessen Teildiagramm 134 so gestaltet sein, dass dessen Betriebszeit - dargestellt zwischen den Zeiten t1 und t2 - zum einen mit den Betriebszeiten der anderen Feldgeräte (Teildiagramme 131, 132, 133) überlappt und zum andern den Teildiagrammen der anderen Feldgeräten jeweils ein eindeutig definierter Zeitbereich zugewiesen ist.

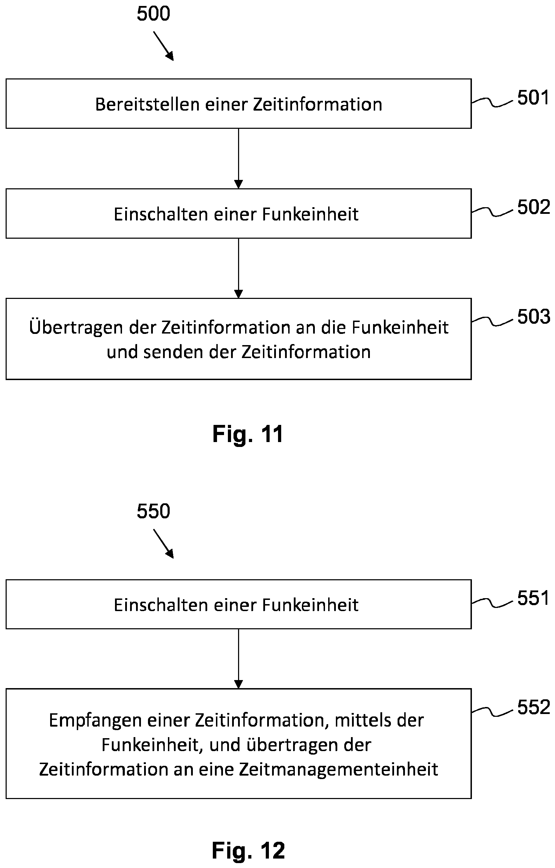

In **Fig. 11** ist ein erstes Verfahren 500 zum Betrieb eines batteriebetriebenen Feldgeräts 100 dargestellt. Dabei wird in Schritt 501 eine Zeitinformation, mittels einer Zeitmanagementeinheit 301, bereitgestellt. Dies umfasst beispielsweise das Auslesen einer lokalen Zeit aus einer Uhr des Feldgeräts 100 und eine Umwandlung in ein Format, das mit anderen Geräten vereinbart wurde. Dies kann - alternativ oder zusätzlich - auch das Auslesen einer Steuerzeit, z.B. aus einer Recheneinheit 450, umfassen.

In Schritt 502 wird eine Funkeinheit 350, mittels eines Schalters 250, eingeschaltet. Dies kann direkt geschehen, durch Betätigen des Schalters 250, oder - bei einem steuerbaren Schalter 250 - mittels einer Konsole oder durch die Funkeinheit 350.

In Schritt 503 wird die Zeitinformation an die Funkeinheit 350 übertragen. Anschließend wird die Zeitinformation, mittels der Funkeinheit 350, gesendet. Die Zeitinformation kann zur Synchronisation der lokalen Zeit verwendet werden. In einer Ausführungsform kann die Zeitinformation zur Steuerung eines anderen Feldgeräts 100 verwendet werden.

**Fig. 12** zeigt ein zweites Verfahren 550 zum Betrieb eines batteriebetriebenen Feldgeräts 100. Dabei wird in Schritt 551 eine Funkeinheit 350, mittels eines Schalters 250, eingeschaltet. Dies kann direkt geschehen, durch Betätigen des Schalters 250, oder - bei einem steuerbaren Schalter 250 - mittels einer Konsole oder durch die Funkeinheit 350.

In Schritt 502 wird eine Zeitinformation, mittels der Funkeinheit 350 und der Zeitinformation an eine Zeitmanagementeinheit 301 übertragen. Die Zeitinformation kann zur Synchronisation der lokalen Zeit verwendet werden. In einer Ausführungsform kann die Zeitinformation zur Steuerung dieses Feldgeräts 100 verwendet werden.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

- 100, 100a .. 100f: batteriebetriebenes Feldgerät
- 110, 120, 130: Zeitdiagramm
- 111, 121 .. 123, 131 .. 134, 191: Teildiagramme
- 150: Behälter
- 160: Füllgut
- 170: Füllstand
- 190: netzbetriebenes Gerät
- 200: Energiespeicher
- 205, 215: erste Leitung, zweite Leitung
- 207, 255: Leitung
- 208: Anschluss
- 250: Schalter
- 301: Zeitmanagementeinheit
- 305: Steuerleitung
- 350: Funkeinheit
- 355, 365: erstes Interface, zweites Interface
- 360: Konsole
- 370: Cloud
- 380: Server
- 400: Verbraucher
- 410: Sensor, Messfrontend
- 420: Anzeigefrontend
- 450: Recheneinheit
- 500, 550: Verfahren
- 501 .. 503, 551 .. 552: Schritte

## Patentansprüche

1. Batteriebetriebenes Feldgerät (100), insbesondere Füllstand-, Durchfluss-, Druck-Sensorvorrichtung oder Anzeige-Vorrichtung, aufweisend:
einen Energiespeicher (200),
eine Zeitmanagementeinheit (301), die mit dem Energiespeicher (200) über eine erste Leitung (205) verbunden ist, und
eine Funkeinheit (350), die mit dem Energiespeicher (200) über einen Schalter (250) verbunden ist,
**dadurch gekennzeichnet, dass** die Funkeinheit (350) eingerichtet ist, eine Zeitinformation über die nächste Messung über ein erstes Interface (355) an die Zeitmanagementeinheit (301) zu übertragen und/oder von der Zeitmanagementeinheit (301) zu empfangen, nur wenn der Schalter (250) eingeschaltet ist,
und dass die Zeitmanagementeinheit (301) eingerichtet ist, den Schalter (250) mittels der Zeitinformation zu steuern.

2. Feldgerät (100) nach Anspruch 1,
wobei die Zeitinformation eine absolute Zeit, eine relative Zeit, eine Kombination und/oder eine Wiederholung der absoluten oder relativen Zeit ist.

3. Feldgerät (100) nach Anspruch 2,
wobei die Zeitinformation, insbesondere die absolute Zeit oder die relative Zeit, zur zeitlichen Synchronisation des Feldgeräts (100) verwendet wird.

4. Feldgerät (100) nach einem der vorhergehenden Ansprüche, weiterhin aufweisend:
eine Konsole (360), die entweder über eine weitere Leitung (207) mit dem Energiespeicher (200) verbunden ist oder einen eigenen Energiespeicher aufweist,
wobei die Zeitmanagementeinheit (301) eingerichtet ist, die Zeitinformation an die Konsole (360) zu übertragen und/oder von der Konsole (360) zu empfangen.

5. Feldgerät (100) nach einem der vorangehenden Ansprüche, weiterhin aufweisend:
ein Messfrontend (410) und/oder ein Anzeigefrontend (420), das mit dem Energiespeicher (200) über einen Schalter (250) verbunden ist,
wobei das Messfrontend (410) eingerichtet ist, einen Messwert, welcher einen Füllstand, einen Durchfluss oder einen Druck umfasst, zu messen, und
das Anzeigefrontend (420) eingerichtet ist, den Messwert anzuzeigen.

6. Feldgerät (100) nach einem der vorangehenden Ansprüche,
wobei die Funkeinheit (350) weiterhin eingerichtet ist, die Zeitinformation und/oder den Messwert an ein anderes Feldgerät (100) zu übertragen und/oder von dem anderen Feldgerät (100) zu empfangen.

7. Feldgerät (100) nach einem der vorangehenden Ansprüche,
wobei die Funkeinheit (350) und/oder die Konsole (360) weiterhin eingerichtet ist, die Zeitinformation und/oder den Messwert an einen Server (380) zu senden und/oder von dem Server (380) zu empfangen.

8. Feldgerät (100) nach einem der vorangehenden Ansprüche, weiterhin aufweisend:
eine Rechen- und Steuereinheit (450), die zum Empfangen und zur Verarbeitung des Messwerts von dem Messfrontend (410) und/oder zum Aufbereiten und Senden des Messwerts an das Anzeigefrontend (420) eingerichtet ist.

9. Feldgerät (100) nach einem der vorangehenden Ansprüche, wobei die Funkeinheit (350) Sender und/oder Empfänger eines Niedrigenergieweitverkehrnetzwerks ist.

10. Verfahren zum Betrieb eines batteriebetriebenen Feldgeräts (100) nach einem der Ansprüche 1 bis 9, mit den Schritten:
- Einschalten einer Funkeinheit (350), mittels eines Schalters (250);
- Empfangen einer Zeitinformation, mittels der Funkeinheit (350) und übertragen der Zeitinformation an eine Zeitmanagementeinheit (301), wobei die Zeitmanagementeinheit (301) eingerichtet ist, den Schalter (250) mittels der Zeitinformation zu steuern.

11. Verfahren nach Anspruch 10, mit den weiteren Schritten:
- Bereitstellen einer Konsole (360);
- Senden oder empfangen einer Zeitinformation, von der oder an die Konsole (360).

12. Programmelement, welches, wenn es auf einer Zeitmanagementeinheit (301) und/oder auf einer Rechen- und Steuereinheit (450) ausgeführt wird, geeignet ist, das Verfahren nach einem der Ansprüche 10 oder 11 durchzuführen.

13. Computerlesbares Medium, auf dem ein Programmelement nach Anspruch 12 gespeichert ist.

14. Verwendung eines batteriebetriebenen Feldgeräts (100) nach einem der Ansprüche 1 bis 9 zur Messung und/oder zur Anzeige des Füllstands, Drucks oder Durchflusses von Flüssigkeiten oder von Schüttgut.

## Claims

1. A battery-operated field device (100), particularly a fill level device measuring device, a flow measuring device, a pressure sensor device, or a display device, comprising:
an energy storage (200),
a time management unit (301) which is connected to the energy storage (200) via a first line (205),
a radio unit (350), which is connected to the energy storage (200) via a switch (250),
**characterized in that** the radio unit (350) is configured to transmit a time information about the next measurement to the time management unit (301) via a first interface (355) and/or to receive said time information from the time management unit (301), only when the switch (250) is activated, and
the time management unit (301) is configured to control the switch (250) by means of the time information.

2. The field device (100) according to claim 1,
wherein the time information is an absolute time, a relative time, a combination and/or a repetition of the absolute or the relative time.

3. The field device (100) according to claim 2,
wherein the time information, in particular the absolute time or the relative time, is used for a temporal synchronisation of the field device (100).

4. The field device (100) according to any one of the preceding claims, further comprising:
a console (360), which is either connected via a further line (207) to the energy storage (200) or has its own energy storage means,
wherein the time management unit (301) is configured to transmit the time information to the console (360) and/or to receive said time information from the console (360).

5. The field device (100) according to any one of the preceding claims, further comprising:
a measuring front end (410) and/or a display front end (420), which is connected to the energy storage (200) via a switch (250),
wherein the measuring front end (410) is configured to measure a measured value comprising a fill level, a flow, or a pressure, and
the display front end (420) is configured to display the measured value.

6. The field device (100) according to claim 1,
wherein the radio unit (350) is further configured to transmit the time information and/or the measured value to another field device (100) and/or to receive the time information and/or the measured value from the other field device (100).

7. The field device (100) according to any one of the preceding claims,
wherein the radio unit (350) and/or the console (360) is further configured to transmit the time information and/or the measured value to a server (380) and/or to receive the time information and/or the measured value from the server (380).

8. The field device (100) according to any one of the preceding claims, further comprising:
a processing and control unit (450), which is configured to receive and process the measured value from the measuring front end (410) and/or to process and transmit the measured value to the display front end (420).

9. The field device (100) according to any one of the preceding claims,
wherein the radio unit (350) is a transmitter and/or receiver of a low-energy wide area network.

10. A method for operating a battery-operated field device (100) according to any one of the claims 1 to 9, comprising the steps:
- Activating a radio unit (350) by means of a switch (250);
- Receiving a time information by means of the radio unit (350) and transmitting the time information to a time management unit (301), wherein the time management unit (301) is configured to control the switch (250) by means of the time information;

11. The method according to claim 10, comprising the steps:
- Providing a console (360);
- Transmitting or receiving a time information to or from the console (360).

12. A program element which, when executed in a time management unit (301) and/or in a processing and control unit (450), is configured to execute the method according to one of the claims 10 or 11.

13. A computer-readable medium, in which a program element according to claim 12 is stored.

14. A use of a battery-operated field device (100) according to any one of the claims 1 to 9, for measuring and/or displaying a fill level, a pressure, or a flow of fluids or of a bulk material.

## Revendications

1. Appareil de terrain alimenté par batterie (100), en particulier dispositif capteur de niveau de remplissage, de débit, de pression ou dispositif d'affichage, présentant :
une unité de stockage d'énergie (200),
une unité de gestion du temps (301) qui est reliée à l'unité de stockage d'énergie (200) via une première ligne (205) et
une unité radio (350) qui est reliée à l'unité de stockage d'énergie (200) via un commutateur (250),
**caractérisé en ce que**
l'unité radio (350) est conçue pour transmettre une information de temps sur la mesure suivante à l'unité de gestion du temps (301) et/ou pour recevoir une information de temps de l'unité de gestion du temps (301) via une première interface (355) uniquement lorsque l'interrupteur (250) est activé,
et **en ce que**
l'unité de gestion du temps (301) est conçue pour commander le commutateur (250) au moyen de l'information de temps.

2. Appareil de terrain (100) selon la revendication 1,
dans lequel l'information de temps est un temps absolu, un temps relatif, une combinaison et/ou une répétition du temps absolu ou relatif.

3. Appareil de terrain (100) selon la revendication 2,
dans lequel l'information de temps, en particulier le temps absolu ou le temps relatif, est utilisée pour la synchronisation temporelle de l'appareil de terrain (100).

4. Appareil de terrain (100) selon l'une des revendications précédentes, présentant en outre :
une console (360) qui est reliée à l'unité de stockage d'énergie (200) via une autre ligne (207) ou qui présente sa propre unité de stockage d'énergie,
dans lequel l'unité de gestion du temps (301) est conçue pour transmettre l'information de temps à la console (360) et/ou pour la recevoir de la console (360).

5. Appareil de terrain (100) selon l'une des revendications précédentes, présentant en outre :
un frontal de mesure (410) et/ou un frontal d'affichage (420) qui sont reliés à l'unité de stockage d'énergie (200) via un commutateur (250),
dans lequel le frontal de mesure (410) est conçu pour mesurer une valeur de mesure qui comprend un niveau de remplissage, un débit ou une pression, et
le frontal d'affichage (420) est conçu pour afficher la valeur de mesure.

6. Appareil de terrain (100) selon l'une des revendications précédentes,
dans lequel l'unité radio (350) est en outre conçue pour transmettre l'information de temps et/ou la valeur de mesure à un autre appareil de terrain (100) et/ou pour les recevoir de l'autre appareil de terrain (100).

7. Appareil de terrain (100) selon l'une des revendications précédentes,
dans lequel l'unité radio (350) et/ou la console (360) sont en outre conçues pour émettre l'information de temps et/ou la valeur de mesure à un serveur (380) et/ou pour les recevoir du serveur (380).

8. Appareil de terrain (100) selon l'une des revendications précédentes, présentant en outre :
une unité de calcul et de commande (450) qui est conçue pour recevoir et traiter la valeur de mesure provenant du frontal de mesure (410) et/ou pour mettre en forme et émettre la valeur de mesure au frontal d'affichage (420).

9. Appareil de terrain (100) selon l'une des revendications précédentes,
dans lequel l'unité radio (350) est un émetteur et/ou un récepteur d'un réseau étendu à basse consommation.

10. Procédé de fonctionnement d'un appareil de terrain alimenté par batterie (100) selon l'une des revendications 1 à 9, comprenant les étapes suivantes :
- activation d'une unité radio (350) au moyen d'un commutateur (250) ;
- réception d'une information de temps au moyen de l'unité radio (350) et transmission de l'information de temps à une unité de gestion du temps (301), l'unité de gestion du temps (301) étant conçue pour commander le commutateur (250) au moyen de l'information de temps.

11. Procédé selon la revendication 10, comprenant les étapes supplémentaires suivantes :
- préparation d'une console (360) ;
- émission ou réception d'une information de temps depuis ou à la console (360).

12. Élément de programme qui, lorsqu'il est exécuté sur une unité de gestion du temps (301) et/ou sur une unité de calcul et de commande (450), est adapté à mettre en œuvre le procédé selon l'une des revendications 10 ou 11.

13. Support lisible par ordinateur sur lequel est stocké un élément de programme selon la revendication 12.

14. Utilisation d'un appareil de terrain alimenté par batterie (100) selon l'une des revendications 1 à 9 pour mesurer et/ou afficher le niveau de remplissage, la pression ou le débit de liquides ou de matières en vrac.
